# EUROPÄISCHE PATENTSCHRIFT

(11) **EP 2 434 565 B1**
(45) Veröffentlichungstag und Bekanntmachung des Hinweises auf die Patenterteilung: **19.03.2014**
(21) Anmeldenummer: 11007465.5
(22) Anmeldetag: 14.09.2011
(51) Int. Cl.: H01M 2/02, H01M 2/16, H01M 4/32, H01M 4/38, H01M 10/34, H01M 10/60, H01M 2/12, H01M 4/66, H01M 4/72

(54) **Nickel-Metallhydrid-Akkumulator**
Nickel-metal hydrid battery
Accumulateur hydride nickel-métal

(30) Priorität: 27.09.2010 DE 102010046647
(43) Veröffentlichungstag der Anmeldung: 28.03.2012
(73) Patentinhaber: Hoppecke Batterie Systeme GmbH, 59929 Brilon (DE)
(72) Erfinder: Ohms, Detlef, Dr. rer. nat., 37085 Göttigen (DE); Schädlich, Gunter, Dr. rer. nat., 08459 Neukirchen (DE); Kleinschnittger, Boris, Dipl.-Ing., 59929 Brilon (DE); Markolf, Rainer, 34477 Twistetal (DE); Schmelter, Katja, 59929 Brilon (DE)
(74) Vertreter: Stenger, Watzke & Ring

(56) Entgegenhaltungen:
- EP-A1- 1 729 360
- WO-A1-2009/145375
- DE-T2- 69 812 826

## Beschreibung

Die Erfindung betrifft einen Nickel-Metallhydrid-Akkumulator für industrielle Anwendungen, mit positiven Nickel-Hydroxidelektroden und hiervon separierten negativen Metallhydridelektroden sowie mit einem die Elektroden umgebenden alkalischen Elektrolyt und einer die spezifische Wärmekapazität des Akkumulators erhöhenden Thermoeinrichtung, welche durch ein zusätzliches Elektrolytvolumen gebildet ist, wobei der Akkumulator ein die Elektroden und den Elektrolyten aufnehmendes Kunststoffgehäuse mit einem Überdruckventil aufweist.

Nickel-Metallhydrid-Akkumulatoren, kurz NiMH-Akkumulatoren sind aus dem Stand der Technik an sich bekannt, weshalb es eines gesonderten druckschriftlichen Nachweises an dieser Stelle nicht bedarf.

Nickel-Metallhydrid-Akkumulatoren verfügen über eine positive Elektrode aus Nickelhydroxid. Die negative Elektrode ist aus einem Metallhydrid gebildet. Als Elektrolyt kommt eine Lauge, beispielsweise eine Kalilauge zum Einsatz.

Nickel-Metallhydrid-Akkumulatoren haben sich im alltäglichen Praxiseinsatz bewehrt. Sie bieten im Vergleich zu Nickel-Cadmium-Akkumulatoren bei gleicher Spannung in etwa die doppelte Energiedichte. Darüber hinaus sind sie haltbarer als Nickel-Cadmium-Akkumulatoren und kommen vollständig ohne das giftige Schwermetall Cadmium aus.

In nachteiliger Weise reagieren Nickel-Metallhydrid-Akkumulatoren aber empfindlich auf Überhitzung. Eine solche Überhitzung kann sich in Folge beispielsweise einer Überladung einstellen. In der Konsequenz einer Überhitzung kann es zur Abnahme der Lademenge, das heißt der Kapazität des Nickel-Metallhydrid-Akkumulators mit der Folge einer verringerten Lebensdauer kommen.

Aus der DE 10 2008 044 162 A1 ist eine Batterie bekannt geworden, in der wenigstens ein Wärmeleitelement zur Erhöhung der Wärmeleitfähigkeit angeordnet ist. Das hier vorgeschlagene Wärmeleitelement ist im Wesentlichen als ein stab- oder plattenförmiges Element aus Metall ausgebildet. Mit dieser Ausgestaltung bezweckt die DE 10 2008 044 162 A1 zum einen eine erhöhte Wärmeleitung zur Reduzierung der Temperatur bei hohen Lade- bzw. Entladeraten und zum anderen eine schnellere Erwärmung der Batterie auf eine bestimmte Mindestzelltemperatur bei tiefen Temperaturen. Mit der DE 10 2008 044 162 A1 wird demnach vorgeschlagen, als Wärmeleitelement einen Festkörper einzusetzen, nämlich ein Metallelement, wobei es darauf ankommt, ein Wärmeleitelement einzusetzen, das eine möglichst hohe Wärmeleitfähigkeit aufweist, da es der Lehre nach der DE 10 2008 044 162 A1 darum geht, eine möglichst schnelle Wärmeverteilung innerhalb der Batterie zu erzielen, damit auch bei tiefen Temperaturen eine möglichst schnelle Erwärmung auf eine Mindestzellentemperatur erreicht werden kann.

Aus der DE 698 36 374 T2 ist ein Antriebssystem für Hybrid-Elektrofahrzeuge mit einem NIMH-Batteriemodul bekannt geworden, welches zum einen eine hohe spezifische Energie zur Erhöhung der Reichweite des Fahrzeuges liefert sowie zum anderen ein gutes thermisches Management aufweist. Letzteres soll durch wärmeleitfähige Materialzusätze der Elektroden erreicht werden. Diese Materialzusätze können zum Beispiel in einer Plattierung der Elektroden mit einem leitfähigen Material bestehen. Ähnlich zur zuvor benannten DE 10 2008 044 162 A1 geht es also auch der DE 698 36 374 T2 darum, eine Erhöhung der Wärmeleitfähigkeit innerhalb der Batterie zu erzielen.

Die DE 198 23 916 A1 offenbart eine Batterie, welche eine Flüssigelektrolyt-Umwälzvorrichtung zur Umwälzung des Elektrolyten aufweist. Durch diese Umwälzung soll eine Verbesserung des stöchiometrischen Verhältnisses der Säure in den unterschiedlichen Bereichen der Batterie und damit eine bessere Ausnutzung der Elektrodenfläche erreicht werden. Für den Fall, dass die Batterie ruht, dass das die Batterie tragende Fahrzeug also nicht in Bewegung ist, ist eine Heizung oder Kühlung installiert, die den Elektrolyt durch Konvektion umwälzt.

Aus der DE 698 12 826 T2 ist ein wartungsfreier industrieller Akkumulator bekannt geworden, und zwar ein solcher in offener Bauweise. Um den Verlust von Wasser aufgrund einer Überladung und damit eine Überhitzung des Akkumulators zu vermeiden, wird vorgeschlagen, den Elektrolyten in überschüssiger Menge bezüglich der auf die Poren der Komponenten begrenzten Menge einzubringen, wobei der überschüssige Elektrolyt wenigsten teilweise zwischen der Basis eines elektromechanischen Bündels und dem Boden des Behälters vorgehalten wird und wobei eine zusätzliche Vorrichtung zur Rekombination des Sauerstoffes eingesetzt wird. Diese Anordnung soll dafür sorgen, dass das elektromechanische Bündel während der dargestellten drei Betriebsphasen des Akkumulators nicht austrocknet.

Es ist ausgehend vom Vorbeschriebenen die **Aufgabe** der Erfindung, einen gegenüber dem Stand der Technik verbesserten Nickel-Metallhydrid-Akkumulator vorzuschlagen, der insbesondere gegenüber Temperatureinflüssen unempfindlicher ist.

Zur Lösung dieser Aufgabe wird mit der Erfindung ein Nickel-Metallhydrid-Akkumulator vorgeschlagen, der sich dadurch auszeichnet, dass das zusätzliche Elektrolytvolumen oberhalb der Separatoren ausgebildet ist, so dass der Pegelstand des Elektrolyten 20 mm bis 50 mm oberhalb von die Elektroden voneinander isolierenden Separatoren ausgebildet ist, wobei der Pegelstand über dem für einen ordnungsgemässen Betrieb des Akkumulators erforderlichen Pegelstand des Elektrolyten liegt.

Der Akkumulator nach der Erfindung ist mit einer Thermoeinrichtung ausgerüstet, die die spezifische Wärmekapazität des Akkumulators erhöht. Aufgrund dieser Ausgestaltung kann der erfindungsgemäße Nickel-Metallhydrid-Akkumulator ein Mehr an Wärmeenergie aufnehmen, ohne dass es zu einer Überhitzung kommt. Der erfindungsgemäße Nickel-Metallhydrid-Akkumulator ist damit gegenüber Temperatureinwirkungen weniger anfällig, womit in vorteilhafter Weise die Lademenge, das heißt die Kapazität des Akkumulators im Falle einer Temperatureinwirkung im Unterschied zum Stand der Technik zumindest weniger, wenn nicht sogar gar nicht abnimmt. In der Konsequenz ergibt sich eine Verlängerung der Gesamtlebensdauer des Akkumulators.

Die erfindungsgemäße Ausgestaltung gestattet den verstärkten Einsatz von Nickel-Metallhydrid-Akkumulatoren in industriellen Anwendungen, beispielsweise als Akkumulatoren-Hybridfahrzeuge. Die Gefahr einer Überhitzung in Folge einer Überladung ist dank der erfindungsgemäßen Ausgestaltung minimiert, womit der erfindungsgemäße Akkumulator gegenüber aus dem Stand der Technik bekannten Akkumulatoren anwenderfreundlicher ist.

Die Thermoeinrichtung ist erfindungsgemäß durch ein zusätzliches Elektrolytvolumen gebildet. Für den ordnungsgemäßen Betrieb eines Akkumulators der gattungsgemäßen Art ist so viel Elektrolyt vorzusehen, dass die Elektroden bzw. die die Elektroden von einander trennenden Separatoren von Elektrolyt umgeben sind, das heißt nicht trocken liegen. Mit der Erfindung wird nun vorgeschlagen, zur Ausgestaltung der Thermoeinrichtung ein zusätzliches Elektrolytvolumen vorzusehen, das heißt den Nickel-Metallhydrid-Akkumulator mit mehr Elektrolyt zu bestücken, als für einen ordnungsgemäßen Betrieb des Akkumulators notwendig ist. In der Konsequenz ergibt sich ein Elektrolytüberschuss, welcher die spezifische Wärmekapazität des Akkumulators erhöht und insofern die Thermoeinrichtung ausbildet.

Die Verwendung von zusätzlichem Elektrolyt ist nicht frei von Nachteilen, insbesondere dann nicht, wenn der Nickel-Metallhydrid-Akkumulator als Akkumulator für ein Fahrzeug, beispielsweise ein Hybridfahrzeug, Verwendung finden soll. So bringt die zusätzliche Verwendung von Elektrolyt zusätzliches Gewicht mit sich. Dem ständigen Bestreben der Gewichtsreduzierung, insbesondere im Fahrzeugbau, wird so entgegengewirkt. Es hat sich aber in überraschender Weise gezeigt, dass der Nachteil des erhöhten Gewichts durch den Vorteil der erhöhten Wärmekapazität mehr als aufgehoben ist. Insbesondere deshalb, weil die Lebensdauer des Akkumulators drastisch erhöht werden kann, was im Unterschied zu vorbekannten Akkumulatoren durch Austausch bedingte Folgekosten vermeiden hilft. Darüber hinaus können Material und Energieressourcen eingespart werden, so dass in der Gesamtbilanz die mit der Erfindung einhergehenden Vorteile überwiegen. Dies war so nicht zu erwarten.

Das zusätzliche Elektrolytvolumen entspricht 10 % bis 50 %, bevorzugt 15 % bis 40 %, mehr bevorzugt 20 % des für einen ordnungsgemäßen Betrieb des Akkumulators notwendigen Elektrolytvolumens. Je nach Anwendungsfall und/oder weiterer Maßnahmen zur Verringerung der Temperaturempfindlichkeit des Akkumulators können sich auch andere Werte einstellen.

Die Elektroden und der Elektrolyt sind von einem Kunststoffgehäuse aufgenommen, das ein Überdruckventil bereitstellt. Mittels des Überdruckventils wird sichergestellt, dass sich im Innenraum des Akkumulatorgehäuses kein zu hoher Überdruck ausbildet. Es ist sogar bevorzugt, den erfindungsgemäßen Akkumulator im Unterdruckbereich zu betreiben, so dass der Elektrolytverbrauch minimiert wird. In vorteilhafter Weise kann so die erhöhte Wärmekapazität durch zusätzlichen Elektrolyt über die Lebensdauer des Akkumulators auf hohem Niveau gehalten werden.

In diesem Zusammenhang wird ferner vorgeschlagen, dass der Akkumulator über ein im Innenraum des Akkumulators untergebrachtes Rekombinationselement verfügt. Durch das Rekombinationselement wird der bei einer Überladung des Akkumulators gebildete Sauerstoff und Wasserstoff zu Wasser rekombiniert, in Folge dessen sich der Akkumulator in fast allen Betriebszuständen im Unterdruckbereich befindet, wodurch die Elektroden zusammengepresst werden, was den Elektrodenabstand minimiert. Eine Verringerung der Innenwiderstände wird so erreicht.

Zur mechanischen Stabilisierung des Akkumulatorgehäuses, insbesondere für den Betrieb des Akkumulators im Unterdruckbereich, kommt gemäß einem weiteren Merkmal der Erfindung ein Aussteifungselement zum Einsatz. Dieses ist vorzugsweise oberhalb des Elektrolytpegels im Innenraum des Kunststoffgehäuses des Akkumulators angeordnet.

Insbesondere aus Sicherheitsgründen kann gemäß einem weiteren Merkmal der Erfindung ein Rückzündungsschutz vorgesehen sein, beispielsweise in Form einer porösen Fritte, die in Gasausströmrichtung dem Überdruckventil vorgeschaltet ist.

Als Elektrodenträgermaterialien kommen vorzugsweise vernickelte Vliesmaterialen zum Einsatz. Daneben können auch andere vernickelte Metallträger, wie zum Beispiel gereckte Streckmetalle oder Metallschäume eingesetzt werden. Die Füllung der Elektrodenträgerstruktur mit den aktiven Materialien erfolgt dabei derart, dass eine Paste eingesetzt wird, die neben den elektrochemisch aktiven Materialien und dem Bindemittel ein Geliermittel enthält, welches eine gleichmäßige Ausfüllung der Struktur ermöglicht. Als Geliermittel können verschiedene wasserlösliche langkettige Polymere verwendet werden, die eine hohe Viskosität und Volumenstabilität der pastösen Aktivmasse bewirken. Auf diese Weise wird es erleichtert, die Beladung der Elektrodenträgerstruktur zu erreichen.

Die Elektroden sind gemäß einem weiteren Merkmal der Erfindung in Separatortaschen eingebracht, sind also als sogenannte getaschte Elektroden ausgebildet. Es ist dabei bevorzugt, dass die Separatortaschen an drei Seiten verschlossen sind, beispielsweise durch Umfalten, Verschweißen und/oder dergleichen.

Die Separatortaschen sind vorzugsweise aus einem dauerhaft benetzbaren polyolefenischen Vlies oder abwechselnd aus einem polyamidischen Vlies gebildet, wobei sich die Separatortaschen in diesem Fall berühren. Im Falle der abwechselnden Verwendung eines polyolefenischen Vliesmaterials einerseits und eines polyamidischen Vliesmaterials andererseits, ist es bevorzugt, dass die Elektroden der beiden Polaritäten in ein jeweiliges Vliesmaterial eingetascht sind, so dass die eine Elektrodensorten in den polyolefenischen Separator und die andere Elektrodensorte in den polyamidischen Separator eingebracht ist. Diese wechselseitige Anordnung der unterschiedlichen Separatormaterialien und ihr Berühren im Zellpacket bewirken, dass beide Separatoren dauerhaft sicher mit Elektrolyt benetzt sind, wodurch eine Austrocknung auch bei niedrigem Elektrolytstand verhindert ist.

Als Elektrolyt findet insbesondere eine Alkalilösung Verwendung, die vorzugsweise aus einem Gemisch von Lithiumhydroxid, Natriumhydroxid und/oder Kaliumhydroxid gebildet ist. Die Zusammensetzung kann je nach Einsatz und Anforderung variieren.

Die positive Elektrode verfügt vorzugsweise über einen Nickelableiter und eine bindemittelhaltige Aktivmasse auf Basis von Nickelhydroxid. Die Aktivmasse kann zusätzlich zu den elektrochemisch wirkenden Bestandteilen ein Gelierungsmittel enthalten.

Die negative Elektrode verfügt über einen Metallträger und eine bindehaltige Aktivmasse auf Basis einer Wasserstoffspeicherlegierung. Auch die bindemittelhaltige Aktivmasse der negativen Elektrode kann ein Gelierungsmittel enthalten.

Als Träger für die positive Elektrode kommt insbesondere ein vernickeltes Faservlies oder eine andere Nickelstruktur mit oder ohne innenliegendem Kunststoffkern in Betracht.

Als Gelierungsmittel findet vorzugsweise eine wässrige Polymerlösung Verwendung.

Als Träger für die negative Elektrode kann gleichfalls ein vernickeltes Faservlies Verwendung finden. Auch eine Nickelstruktur mit oder ohne innenliegendem Kunststoffkern kommt in Betracht. Ferner kann ein vernickeltes Streckmetall verwendet werden, dessen Metallgehalt zwischen 50 und 170 mg/cm³ liegt.

Das Überdruckventil ist abnehmbar ausgebildet, was die Wartung vereinfacht. Dabei ist das Überdruckventil vorzugsweise derart eingestellt, dass es bei einem Überdruck zwischen 100 mbar bis 2000 mbar öffnet. Es ist im Übrigen selbsttätig schließend ausgebildet.

Die erfindungsgemäß vorgesehene überschüssige Elektrolytmenge trägt als Thermoeinrichtung wesentlich zur Erhöhung der spezifischen Wärmekapazität des Akkumulators bei, womit einerseits die Temperaturbelastung verringert und darüber hinaus die Gefahr einer Überhitzung minimiert wird, und zwar sowohl bei einem Betrieb des Akkumulators, als auch bei Überladung desselben. In vorteilhafter Weise wird so eine Verlangsamung der Alterung der Elektroden erreicht, so dass sich die Akkumulatorlebensdauer insbesondere bei hohen Ladungsdurchsetzen erhöht. Das abnehmbar ausgestaltete Überdruckventil ermöglicht es im Übrigen, eine Wartung des Akkumulators vorzunehmen und im Bedarfsfall Elektrolytverluste auszugleichen.

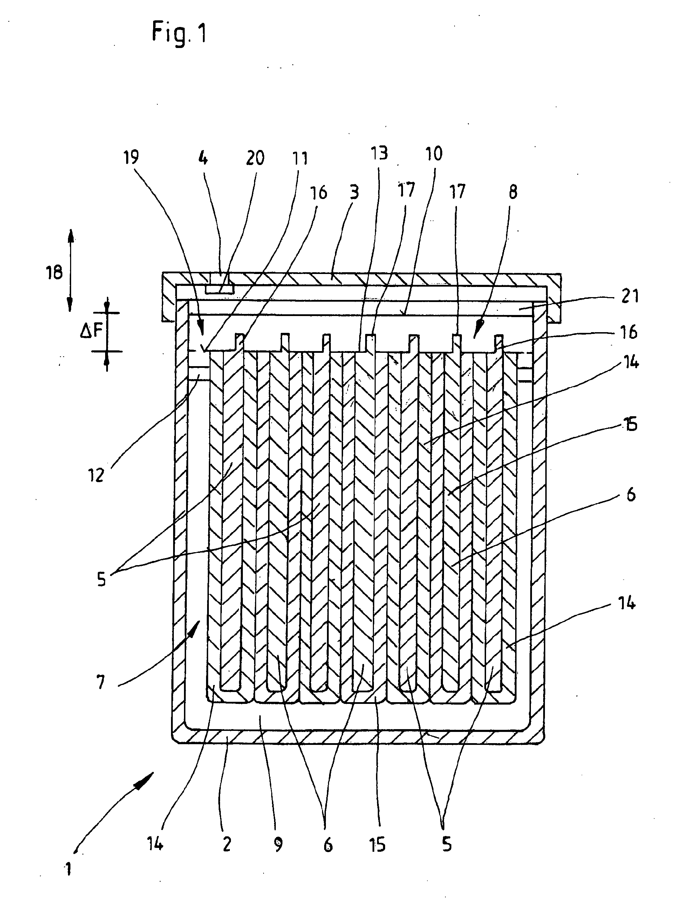

Weitere Merkmale und Vorteile der Erfindung ergeben sich aus der nachfolgenden Beschreibung anhand der einzigen Figur 1, die in schematischer Schnittdarstellung einen erfindungsgemäßen Akkumulator zeigt.

Figur 1 zeigt in schematischer Schnittdarstellung einen Metallhydrid-Akkumulator 1. Dieser verfügt über ein Kunststoffgehäuse 2, das mittels eines Deckels 3 dicht verschließbar ist. In einem Durchbruch des Deckels 3 ist ein Überdruckventil 4 dicht eingesetzt, das innenraumseitig einen Rückzündungsschutz 20 trägt

Im Akkumulatorgehäuse 2 sind positive Nickelhydroxidelektroden 5 sowie negative Metallhydridelektroden 6 angeordnet. Die Elektroden sind hängend gelagert, zu welchem Zweck das Akkumulatorgehäuse 2 entsprechende Aufnahmen 12 in Form von Leisten zur Verfügung stellt. Die Elektroden 5 und 6 sind in taschenförmig ausgebildete Separatoren eingebracht. Dabei befinden sich die positiven Elektroden 5 in den Separatortaschen 14 und die negativen Elektroden 6 in den Separatortaschen 15. Als Material für die Separatortaschen 14 findet ein polyolefinisches Vliesmaterial Verwendung. Die Separatorentaschen 15 für die negativen Elektroden sind aus einem polyamidischen Separatorvlies gebildet.

Die Elektroden 5 und 6 verfügen über Fähnchen 16 und 17, die der elektrischen Verschaltung dienen. Für eine zusätzliche Stabilisierung des Akkumulatorgehäuses 2 ist eine Verstrebung mittels eines Aussteifungselements 21 vorgesehen. Dabei ist das Aussteifungselement 21 in Höhenrichtung 18 oberhalb des Elektrolytpegels 10 ausgebildet.

Innerhalb des Gehäuses 2 befindet sich ferner ein Elektrolyt 9. Dieser umspült die Elektroden 5 und 6 bzw. die Separatortaschen 14 und 15. Für einen ordnungsgemäßen Betrieb des Akkumulators 1 ist ein Pegelstand 11 des Elektrolyten 9 erforderlich, der bis zur oberen Randkante 13 der Separatortaschen 14 und 15 reicht, wie dies in Figur 1 durch die Strichlinie kenntlich gemacht ist. Der Akkumulator 1 verfügt erfindungsgemäß über ein zusätzliches Elektrolytvolumen 8. Zusammen mit dem für einen ordnungsgemäße Betrieb erforderlichen Elektrolytvolumen 7 ergibt sich der Pegelstand 10. Die Differenz zwischem dem Pegelstand 11 und dem Pegelstand 10 ist als Pegeldifferenz Δ F in der Zeichnung dargestellt.

Das zusätzliche Elektrolytvolumen 8 bildet eine Thermoeinrichtung 19 aus, womit die spezifische Wärmekapazität des Akkumulators 1 erhöht ist.

### Bezugszeichen:

- 1: Akkumulator
- 2: Gehäuse
- 3: Deckel
- 4: Überdruckventil
- 5: positive Nickelhydroxidelektrode
- 6: negative Metallhydridelektrode
- 7: Elektrolytvolumen
- 8: zusätzliches Elektrolytvolumen
- 9: Elektrolyt
- 10: Pegelstand Elektrolyt mit zusätzlichem Elektrolytvolumen 8
- 11: Pegelstand Elektrolyt ohne zusätzliches Elektrolytvolumen 8
- 12: Aufnahme
- 13: Randkante
- 14: Separatortasche
- 15: Separatortasche
- 16: Fähnchen
- 17: Fähnchen
- 18: Höhenrichtung
- 19: Thermoeinrichtung
- 20: Rückzündungsschutz
- 21: Aussteifungselement
- ΔF: Differenzpegelstand (Hüllhöhe)

## Patentansprüche

1. Nickel-Metallhydrid-Akkumulator für industrielle Anwendungen, mit positiven Nickel-Hydroxidelektroden (5) und hiervon separierten negativen Metallhydridelektroden (6) sowie mit einem die Elektroden (5, 6) umgebenden alkalischen Elektrolyt (9) und einer die spezifische Wärmekapazität des Akkumulators (1) erhöhenden Thermoeinrichtung (19), welche durch ein zusätzliches Elektrolytvolumen (8) gebildet ist, wobei der Akkumulator ein die Elektroden (5, 6) und den Elektrolyten (9) aufnehmendes Kunststoffgehäuse (2) mit einem Überdruckventil (4) aufweist, **dadurch gekennzeichnet, dass** das zusätzliche Elektrolytvolumen (8) oberhalb der Separatoren (14, 15) ausgebildet ist, so dass der Pegelstand (10) des Elektrolyten (9) 20 mm bis 50 mm oberhalb von die Elektroden (5, 6) voneinander isolierenden Separatoren (14, 15) ausgebildet ist, wobei der Pegelstand (10) über dem für einen ordnungsgemäßen Betrieb des Akkumulators (1) erforderlichen Pegelstand (11) des Elektrolyten (5, 6) liegt.

2. Akkumulator nach Anspruch 1, **dadurch gekennzeichnet, dass** das zusätzliche Elektrolytvolumen (8) 10 % bis 50 % des für einen ordnungsgemäßen Betrieb des Akkumulators (1) notwendigen Elektrolytvolumens (7) entspricht.

3. Akkumulator nach einem der vorhergehenden Ansprüche, **dadurch gekennzeichnet, dass** dem Überdruckventil (4) in Gasausströmrichtung ein Rückzündungsschutz (20) vorgeschaltet ist.

4. Akkumulator nach einem der vorhergehenden Ansprüche, **gekennzeichnet durch** ein Rekombinationselement, das vorzugsweise innerhalb des Kunststoffgehäuses (2) angeordnet ist.

5. Akkumulator nach einem der vorhergehenden Ansprüche, **gekennzeichnet durch** ein Aussteifungselement (21) für das Kunststoffgehäuse (2), das oberhalb des Elektrolytpegels (10) im Innenraum des Kunststoffgehäuses angeordnet ist.

6. Akkumulator nach einem der vorhergehenden Ansprüche, **dadurch gekennzeichnet, dass** die Elektroden (5, 6) eine nickelaufweisende Elektrodenträgerstruktur besitzen.

7. Akkumulator nach Anspruch 6, **dadurch gekennzeichnet, dass** die Elektrodenträgerstruktur aus einem vernickelten Vliesmaterial gebildet ist.

8. Akkumulator nach einem der vorhergehenden Ansprüche, **dadurch gekennzeichnet, dass** die positiven Elektroden (5) und/oder die negativen Elektroden (6) in Taschen (14, 15) aus Separatormaterial angeordnet sind.

9. Akkumulator nach Anspruch 8, **dadurch gekennzeichnet, dass** das Separatormaterial ein polyolefinisches oder ein polyamidisches Vliesmaterial ist.

10. Akkumulator nach einem der vorhergehenden Ansprüche, **dadurch gekennzeichnet, dass** der Elektrolyt (9) eine Alkalilösung ist, die aus einem Gemisch aus Lithiumhydroxid, Natriumhydroxid und/oder Kaliumhydroxid gebildet ist.

## Claims

1. A nickel-metal hydrid accumulator for industrial applications, comprising positive nickel-hydroxide electrodes (5) and negative metal hydrid electrodes (6) separated from these ones as well as an alkaline electrolyte (9) which surrounds the electrodes (5, 6) and a thermal device (19) which increases the specific thermal capacity of the accumulator (1) and which is formed by an additional electrolyte volume (8), wherein the accumulator comprises a plastic housing (2) provided with a pressure relieve valve (4) that receives the electrodes (5, 6) and the electrolyte (9), **characterized in that** the additional electrolyte volume (8) is formed above the separators (14, 15), such that the level (10) of the electrolyte (9) is located 20 mm to 50 mm above the separators (14, 15) which isolate the electrodes (5, 6) from each other, wherein the level (10) is above the level (11) of the electrolyte (9) which is required for a proper operation of the accumulator (1).

2. An accumulator according to claim 1, **characterized in that** the additional electrolyte volume (8) corresponds to 10% to 50% of the electrolyte volume (7) required for a proper operation of the accumulator (1).

3. An accumulator according to one of the preceding claims, **characterized in that** a flash back protection (20) is placed upstream of the pressure relieve valve (4) in the direction of gas emission.

4. An accumulator according to one of the preceding claims, **characterized by** a recombination element which is preferably arranged within the plastic housing (2).

5. An accumulator according to one of the preceding claims, **characterized by** a stiffening element (21) for the plastic housing (2), which is placed above the electrolyte level (10) in the interior of the plastic housing.

6. An accumulator according to one of the preceding claims, **characterized in that** the electrodes (5, 6) have an electrode carrier structure comprising nickel.

7. An accumulator according to claim 6, **characterized in that** the electrode carrier structure is made of a nickel-plated fleece material.

8. An accumulator according to one of the preceding claims, **characterized in that** the positive electrodes (5) and/or the negative electrodes (6) are arranged in pockets (14, 15) made of separator material.

9. An accumulator according to claim 8, **characterized in that** the separator material is a polyolefin or a polyamide fleece material.

10. An accumulator according to one of the preceding claims, **characterized in that** the electrolyte (9) is an alkali solution which is made of a mixture of lithium hydroxide, sodium hydroxide and/or potassium hydroxide.

## Revendications

1. Accumulateur au nickel-hydrure de métal pour des applications industrielles, comprenant des électrodes d'hydroxyde de nickel positives (5) et des électrodes à hydrure de métal négatives (6) séparées de celles-ci ainsi qu'un électrolyte alcalin (9) entourant les électrodes (5, 6) et un dispositif thermique (19) qui fait augmenter la capacité calorifique spécifique de l'accumulateur (1) et qui est formé par un volume d'électrolyte supplémentaire (8), dans lequel l'accumulateur comprend un boîtier en matière plastique (2) comprenant un clapet de surpression (4) et recevant les électrodes (5, 6) et l'électrolyte (9), **caractérisé en ce que** le volume d'électrolyte supplémentaire (8) est formé au-dessus des séparateurs (14, 15) de sorte que le niveau de l'électrolyte (9) se trouve à 20 mm jusqu'à 50 mm au-dessus des séparateurs (14, 15) qui isolent les électrodes (5, 6) les unes des autres, le niveau (10) étant au-dessus du niveau (11) de l'électrolyte (9) qui est nécessaire pour faire fonctionner l'accumulateur (1) correctement.

2. Accumulateur selon la revendication 1, **caractérisé en ce que** le volume d'électrolyte supplémentaire (8) correspond à 10 % à 50 % du volume d'électrolyte (7) nécessaire pour faire fonctionner l'accumulateur (1) correctement.

3. Accumulateur selon l'une des revendications précédentes, **caractérisé en ce qu'**une protection contre le retour d'arc (20) est disposée en amont du clapet de surpression (4) dans la direction d'écoulement de gaz.

4. Accumulateur selon l'une des revendications précédentes, **caractérisé par** un élément de recombinaison qui est de préférence disposé à l'intérieur du boîtier en matière plastique (2).

5. Accumulateur selon l'une des revendications précédentes, **caractérisé par** un élément de rigidification (21) destiné au boîtier en matière plastique (2), lequel est disposé au-dessus du niveau d'électrolyte (10) à l'intérieur du boîtier en matière plastique.

6. Accumulateur selon l'une des revendications précédentes, **caractérisé en ce que** les électrodes (5, 6) possèdent une structure de support d'électrode comprenant du nickel.

7. Accumulateur selon la revendication 6, **caractérisé en ce que** la structure de support d'électrodes est fabriquée en une matière de tissue non tissée et nickelée.

8. Accumulateur selon l'une des revendications précédentes, **caractérisé en ce que** les électrodes positives (5) et/ou les électrodes négatives (6) sont disposées dans des poches (14, 15) en matière de séparateur.

9. Accumulateur selon la revendication 8, **caractérisé en ce que** la matière de séparateur est une matière de tissue non tissée en polyoléfine ou polyamide.

10. Accumulateur selon l'une des revendications précédentes, **caractérisé en ce que** l'électrolyte (9) est une solution alcaline qui est formée par un mélange d'hydroxyde de lithium, d'hydroxyde de sodium et/ou d'hydroxyde de potassium.
